Europäisches Patentamt

European Patent Office

Office européen des brevets

(19)

(11) Veröffentlichungsnummer: **0 381 176**
**A2**

(12) **EUROPÄISCHE PATENTANMELDUNG**

(21) Anmeldenummer: 90101874.7

(22) Anmeldetag: 31.01.90

(51) Int. Cl.⁵: **B29C 41/14, C04B 35/56,**
**C01B 31/36**

(30) Priorität: 01.02.89 DE 3902936

(43) Veröffentlichungstag der Anmeldung:
08.08.90 Patentblatt 90/32

(84) Benannte Vertragsstaaten:
**DE FR GB**

(71) Anmelder: **Hoechst CeramTec**
**Aktiengesellschaft**
**Wilhelmstrasse 14**
**D-8672 Selb(DE)**

(72) Erfinder: **Adasch, Gunter**
**Amundsenstrasse 13**
**D-8590 Marktredwitz(DE)**
Erfinder: **Huber, Jürgen, Dr.**
**Friedrichstrasse 28**
**D-8672 Selb(DE)**

(74) Vertreter: **Spiess, Bernhard et al**
**Hoechst AG Zentrale Patentabteilung**
**Postfach 80 03 20**
**D-6230 Frankfurt am Main 80(DE)**

(54) **Keramische Tauchformen und Verfahren zu ihrer Herstellung.**

(57) Keramische Tauchformen z. B. in Form eines Handschuhs, lassen sich aus siliziertem Siliziumcarbid, drucklos gesintertem Siliziumcarbid, Berylliumoxid oder Aluminiumnitrid herstellen.

Zur Herstellung einer keramischen Tauchform aus SiSiC formt man einen saugfähigen festen Körper mit einem Hohlraum, der das Negativ der angestrebten Tauchform darstellt, bereitet eine Suspension bestehend aus mindestens zwei Kornfraktionen von Siliziumcarbid, gegebenenfalls Kohlenstoff, sowie Bindemittel und Wasser, gießt die Suspension in den Hohlraum des saugfähigen Körpers, wartet, bis ein Teil des Wassers aufgesogen ist, gießt gegebenenfalls den Rest der Suspension aus, läßt den verbleibenden Teil der Suspension antrocknen, öffnet die Form, entnimmt den erhaltenen grünen SiC-Körper, trocknet ihn im Trockenschrank und siliziert bei 1400 bis 1750 °C im Vakuum.

EP 0 381 176 A2

## Keramische Tauchformen und Verfahren zu ihrer Herstellung

Die Erfindung betrifft keramische Tauchformen aus Materialien mit hoher thermischer Leitfähigkeit sowie ein Verfahren zur Herstellung keramischer Tauchformen aus SiSiC.

Es ist Stand der Technik, dünnwandige Vinyltauchform-Erzeugnisse unter Verwendung von Tauchformen aus Aluminium herzustellen. Die Aluminiumformen zeigen jedoch bei der Anwendung eine Reihe von Nachteilen. So wird die Oberfläche im Gebrauch durch das verwendete Suspensionspolymerisat und die in bestimmten Zeitabständen notwendige Reinigung mit korrosiven alkalischen oder sauren Reinigungsmitteln rasch korrodiert.

Weiterhin ist Aluminium und seine Legierungen relativ weich, was zu einer erhöhten Kratzempfindlichkeit der Oberfläche der Tauchformen führt. Im rauhen Betriebseinsatz entstehen durch die unvermeidbaren mechanischen Belastungen auf der Oberfläche der Form Kratzer und Rillen. Mit derart beschädigten Formen lassen sich keine einwandfreien Artikel mehr herstellen.

Für die Herstellung von Latex-Artikeln ist seit langem die Anwendung von Tauchformen aus Porzellanwerkstoffen bekannt. Die äußere Gestalt von Tauchformen zur Herstellung von Handschuhen läßt sich beispielsweise dem Technischen Prospekt "Dipping Formers" (02L0886) der Anmelderin entnehmen.

Porzellanwerkstoffe weisen jedoch nicht die für die Vinyl-Handschuhfertigung notwendige hohe Wärmeleitfähigkeit von Aluminiumformen auf, die legierungsabhängig bei ca. 100 bis 200 W/mK liegt.

Es wurde nun gefunden, daß sich die Nachteile der bisher verwendeten Tauchformen aus Aluminium- oder Porzellan-Werkstoffen beheben lassen, wenn die Werkstoffe siliciuminfiltriertes Siliciumcarbid (SiSiC), drucklos gesintertes Siliziumcarbid (SSiC), Aluminiumnitrid (AlN) oder Berylliumoxid (BeO) verwendet werden. Diese Werkstoffe weisen eine Wärmeleitfähigkeit auf, die fast gleich oder sogar höher als die von Aluminium ist. Bei Verwendung von Tauchformen aus diesen Materialien ist sichergestellt, daß der Gelierprozeß (Vulkanisation) von Polyvinylchlorid auf den Tauchformen bei Temperaturen um ca. 300°C erfolgen kann und nur eine sehr kurze Expositionszeit in diesem Temperaturbereich erforderlich ist.

Ein weiterer Vorteil der genannten keramischen Werkstoffe ist ihre im Vergleich zu Aluminium hohe Härte und der hohe Verschleiß- und Korrosionswiderstand. Die Dichte der genannten Werkstoffe (2,8 bis 3,1 g/cm³) liegt im Bereich von Aluminium-Legierungen (2,6 bis 2,9 g/cm³), so daß die erfindungsgemäßen Tauchformen nur unwesentlich schwerer als Tauchformen aus Porzellan oder Aluminium sind.

Bei Verwendung von Tauchformen aus den herkömmlichen Porzellanwerkstoffen mit einer deutlich geringeren Wärmeleitfähigkeit erfolgt keine gleichmäßige Erwärmung der Form über die gesamte Oberfläche in der vom Maschinentakt vorgegebenen kurzen Expositionszeit. Dies führt dazu, daß das in dünner Schichtdicke auf der Form befindliche Tauchform-Erzeugnis, z.B. ein Handschuh, partiell verbrennt aber an anderer Stelle wegen zu niedriger Temperatur nicht vollständig polymerisiert ist und noch klebt.

Die geometrische Form des gewünschten Tauchformerzeugnisses (z.B. Handschuh, Fingerling oder Kondom) wird von der Tauchform bestimmt. Die Oberflächenkonturen von Tauchformen sind stetig und zeigen weder Ecken noch Kanten. Die Oberflächenprofilierung (z.B. Rillen, Noppen, Dehnfalten) der Tauchform bildet sich exakt im Tauchformerzeugnis ab. Tauchformen sollen so konstruiert sein, daß sie hohe mechanische Festigkeit bei geringstmöglicher Wanddicke aufweisen. Damit soll erreicht werden, daß bei geringem Gewicht die prozessbedingten Aufheiz- bzw. Abkühlvorgänge schnell erfolgen. Die Wanddicken von Tauchformen aus technischem Porzellan liegen üblicherweise zwischen 3 und 10 mm. Der Dickenbereich für Tauchformen aus SiSiC oder SSiC liegt üblicherweise bei 1 bis 5 mm, kann aber wegen der guten Wärmeleitfähigkeit erforderlichenfalls auch bis 10 mm angehoben werden. Der Dickenbereich für Tauchformen aus Aluminiumnitrid oder Berylliumoxid liegt ebenfalls zwischen 1 und 10 mm.

Es ist vorteilhaft, wenn die Tauchformen im profilierten Oberflächenbereich eine definierte Oberflächenrauhigkeit aufweisen, die zwischen 3 und 50 μm liegt. Dies läßt sich erreichen durch Aufspritzen eines werkstoffidentischen Schlickers vor dem Sintern.

Die Oberfläche der Tauchform besitzt je nach dem Verwendungszweck des Tauchformerzeugnisses häufig an bestimmten Partien Oberflächenreliefs. Diese können im Gebrauchsfall, z. B. bei einem Handschuh an den Fingerspitzen, die Griffsicherheit erhöhen oder bei Handschuhmanschetten die Stabilität verstärken. Diese Reliefs können unterschiedliche Geometrien wie z.B. Rundnoppen, längsgestreckte Rundfalten oder pyramidenförmige abgerundete Erhebungen aufweisen.

Tauchformerzeugnisse für medizinische oder andere hochwissenschaftliche Verwendungen (Gentechnik) müssen 100 % auf ihre Qualität und Zuverlässigkeit geprüft sein.

Für die mit Porzellantauchformen hergestellten Erzeugnisse sind pneumatische Qualitätsprüfungen bekannt. Die mit Aluminiumtauchformen bestückten Produktionseinrichtungen bieten zwar grundsätzlich die Möglichkeit einer elektrischen Prüfung, aber infolge der im Betrieb den Aluminiumtauchformen zugefügten scharfkantigen Beschädigungen der Oberflächen treten an diesen Stellen elektrische Durchschläge auf, ohne daß eigentlich ein Materialfehler des Tauchformerzeugnisses vorliegt. Weil die Tauchformen aus den vorgeschlagenen elektrisch leitfähigen Werkstoffen diesen Nachteil nicht zeigen, können diese in sehr vorteilhafter Weise für die elektrische Prüfung der Tauchformerzeugnisse verwendet werden.

Im einzelnen wird die Prüfung folgendermaßen ausgeführt:

Zwischen der elektrisch leitenden Tauchform und einem geeigneten, elektrisch leitenden Tauchbad (Elektrolyt) wird die Prüfspannung angelegt. Besitzt das Tauchformerzeugnis an irgendeiner Stelle einen Fehler, z.B. Pore, kleines Loch, Stelle mit zu geringer Dicke, dann tritt der elektrische Durchschlag ein. Dieses Verfahren läßt sich in schnellem Takt betreiben und automatisieren.

Es hat in der Vergangenheit nicht an Versuchen gemangelt Tauchformen aus technischem Porzellan mit leitfähigen Glasuren zu überziehen, um sie für die elektrische Qualitätsprüfung geeignet zu machen. Es ist jedoch bisher kein technisches befriedigendes Ergebnis dieser Bemühungen bekannt geworden.

Aluminiumnitrid und Berylliumoxyd weisen diese gute elektrische Leitfähigkeit nicht auf. Sie können jedoch im Vergleich zu SiC-Werkstoffen höhere Werte der Wärmeleitfähigkeit aufweisen und damit vorteilhaft wie SiSiC und SSiC eingesetzt werden. Alle genannten keramischen Werkstoffe gemäß der Erfindung besitzen für den Herstellungsprozeß der Vinyl-Handschuhe eine genügend hohe Thermoschockwechselbeständigkeit.

Die physikalischen Daten der verwendeten keramischen Werkstoffe sind in Tabelle 1 aufgeführt.

Tauchformen aus SiSiC lassen sich nach dem Schlicker-Gieß-Verfahren herstellen. Dieses Verfahren ist z.B. bekannt aus EP-PS 147 478 oder GB-PS 1 596 303.

Hierzu wird zunächst ein saugfähiger fester Körper mit einem Hohlraum hergestellt, der das Negativ der angestrebten Tauchform darstellt. Dann stellt man beispielsweise eine Suspension aus mindestens zwei Kornfraktionen von Siliziumcarbid gegebenenfalls unter Zusatz von Kohlenstoff sowie eines Bindemittels (meist Natriumcarboxymethylcellulose) in Wasser her. Diese Suspension wird in den Hohlraum des saugfähigen festen Körpers gegossen. Man wartet bis ein Teil des Wassers aufgesogen ist, gießt gegebenenfalls den Rest der Suspension aus, läßt antrocknen und öffnet die Form. Der der Gießform entnommene grüne Siliziumcarbid-Körper wird im Trockenschrank getrocknet und bei 1400 bis 1750 $^\circ$C im Vakuum siliziert.

Tabelle 1

| Physikalische Eigenschaften keramischer Werkstoffe für Tauchformen | | | | |
|---|---|---|---|---|
| | SiSiC | SSiC | AIN | BeO |
| Dichte [g/cm$^3$] | 3,03 - 3,10 | 3,05 - 3,10 | 3,2 - 3,3 | 2,8 - 3,0 |
| Biegefestigkeit [N/mm$^2$] | 250 - 380 | 350 - 550 | 170 - 250 | 280 - 350 |
| E-Modul [N/mm$^2$] | 350 - 420 | 300 - 400 | 290 - 320 | 300 - 360 |
| Therm. Ausdehnungskoeffizient (20-1000 $^\circ$C) [$10^6$ K$^{-1}$] | 5,0 | 4,3 | 5,4 | 8,9 |
| Wärmeleitfähigkeit [W/m$\cdot$K] | 100 - 150 | 60 - 150 | 80 - 220 | 150 - 300 |
| Elektr. Widerstand [$\Omega$ cm] | = 10 | = 10 | = $10^{11}$ | = $10^{14}$ |

**Ansprüche**

1. Keramische Tauchform, dadurch gekennzeichnet, daß sie aus siliziertem Siliziumcarbid, drucklos gesintertem Siliziumcarbid, Berylliumoxid oder Aluminiumnitrid besteht.

2. Tauchform gemäß Anspruch 1, dadurch gekennzeichnet, daß sie hohl ist und eine Schichtdicke von 1 bis 10 mm besitzt.

3. Tauchform gemäß Anspruch 1, dadurch gekennzeichnet, daß sie eine Oberflächenrauhigkeit von 3 bis 50 $\mu$m besitzt.

4. Tauchform gemäß Anspruch 1, dadurch gekennzeichnet, daß sie die Form eines Handschuhes besitzt.

5. Verfahren zur Herstellung einer keramischen Tauchform aus SiSiC, wobei man einen saugfähigen festen Körper mit einem Hohlraum formt, der das Negativ der angestrebten Tauchform darstellt, man eine Suspension bestehend aus mindestens zwei Kornfraktionen von Siliziumcarbid, gegebenenfalls Kohlenstoff,

3

sowie Bindemittel und Wasser bereitet, man die Suspension in den Hohlraum des saugfähigen Körpers gießt, man wartet bis ein Teil des Wassers aufgesogen ist, man gegebenenfalls den Rest der Suspension ausgießt, man den verbliebenen Teil der Suspension antrocknen läßt man die Form öffnet, man den erhaltenen grünen SiC-Körper der Form entnimmt, im Trockenschrank trocknet und bei 1400 bis 1750 °C im Vakuum siliziert.